# EUROPEAN PATENT SPECIFICATION

(11) **EP 3 246 185 B1**
(45) Date of publication and mention of the grant of the patent: **16.09.2020**
(21) Application number: 16170448.1
(22) Date of filing: 19.05.2016
(51) Int. Cl.: B60G 3/18, B60K 7/00

(54) **DIRECT DRIVE SYSTEM FOR ELECTRIC CAR**
DIREKTES ANTRIEBSSYSTEM FÜR ELEKTROFAHRZEUG
SYSTÈME D'ENTRAÎNEMENT DIRECT POUR VOITURE ÉLECTRIQUE

(43) Date of publication of application: 22.11.2017
(73) Proprietor: Lin, Chang Hui, Changhu (TW)
(72) Inventor: Lin, Chang Hui, Changhu (TW)
(74) Representative: Cabinet Chaillot

(56) References cited:
- DE-A1-102010 049 615
- DE-A1-102013 213 656
- US-A1- 2009 236 157

## Description

### FIELD OF THE INVENTION

The present invention relates to a direct drive system for an electric car in which a control system controls each of four wheels by using each of four driving motors to reduce power loss and consumption and to enhance driving durability of the electric car.

### BACKGROUND OF THE INVENTION

A conventional transmission system for an electric car contains a gear box, a differential gear, at least one driving shaft, at least one wheel shaft, and at least one driving motor; wherein each driving motor is configured to drive the gear box, the differential gear, the at least one deriving shaft, and the at least one wheel shaft, but at least one transmission belt further drives the gear box in a friction manner, thus causing great power consumption. In addition, although speed change generates between the gear box and the differential gear, the gear box decelerates wheel speed and consumes power seriously.

US 2009/0236157A discloses a body, four wheels, a suspension system, a wheel shaft, a driving motor, a control system of the body, a wheel speed sensor and a braking sensor according to the preamble of claim 1.

DE 102013213656A discloses that an electric motor can be mounted on a leaf spring of the suspension.

The present invention has arisen to mitigate and/or obviate the afore-described disadvantages.

### SUMMARY OF THE INVENTION

One aspect of the present invention is to provide a direct drive system for an electric car in which a control system controls each of four wheels by using each of four driving motors to reduce power loss and consumption and to enhance driving durability of the electric car.

A further aspect of the present invention is to provide a direct drive system for an electric car in which each of the four wheels is driven independently to increase control flexibility, and when one of the four driving motors is broken, the electric car still can be driven to run by others of the four driving motors, thus enhancing driving safety.

Another aspect of the present invention is to provide a direct drive system for an electric car in which a driving motor is a lower of the suspension system so as to simplify the direct drive system.

To obtain the above, a direct drive system for an electric car provided by the present invention is as defined in claim 1.

### BRIEF DESCRIPTION OF THE DRAWINGS

FIG. 1 is a structural diagram showing the assembly of a direct drive system for an electric car according to a preferred embodiment of the present invention.
FIG. 2 is a perspective view showing the assembly of the direct drive system for the electric car according to the preferred embodiment of the present invention.
FIG. 3 is a plan view showing the assembly of the direct drive system for the electric car according to the preferred embodiment of the present invention.
FIG. 4 is another plan view showing the assembly of the direct drive system for the electric car according to the preferred embodiment of the present invention
FIG. 5 is also another plan view showing the assembly of the direct drive system for the electric car according to the preferred embodiment of the present invention

### DETAILED DESCRIPTION OF THE PREFERRED EMBODIMENTS

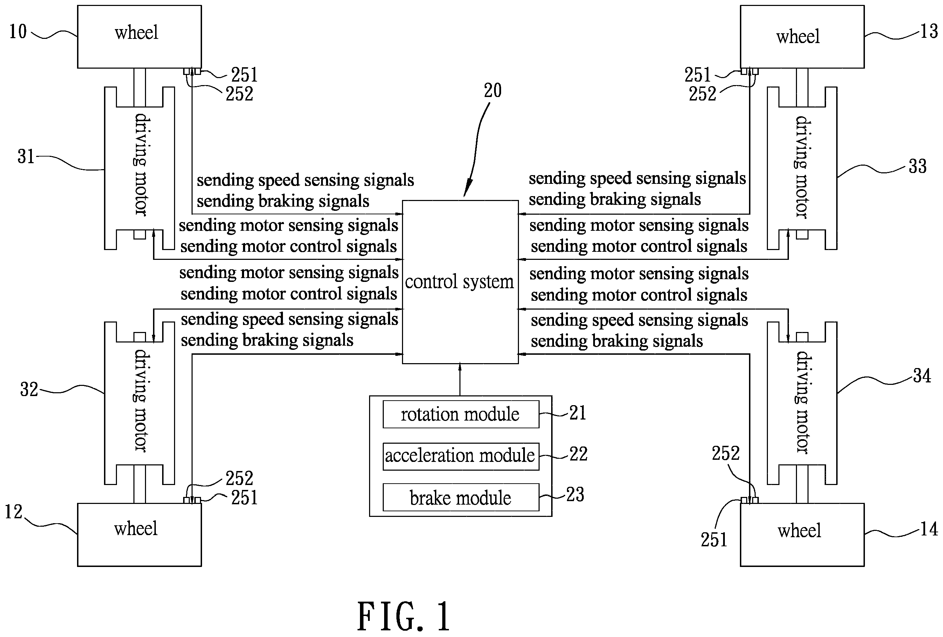

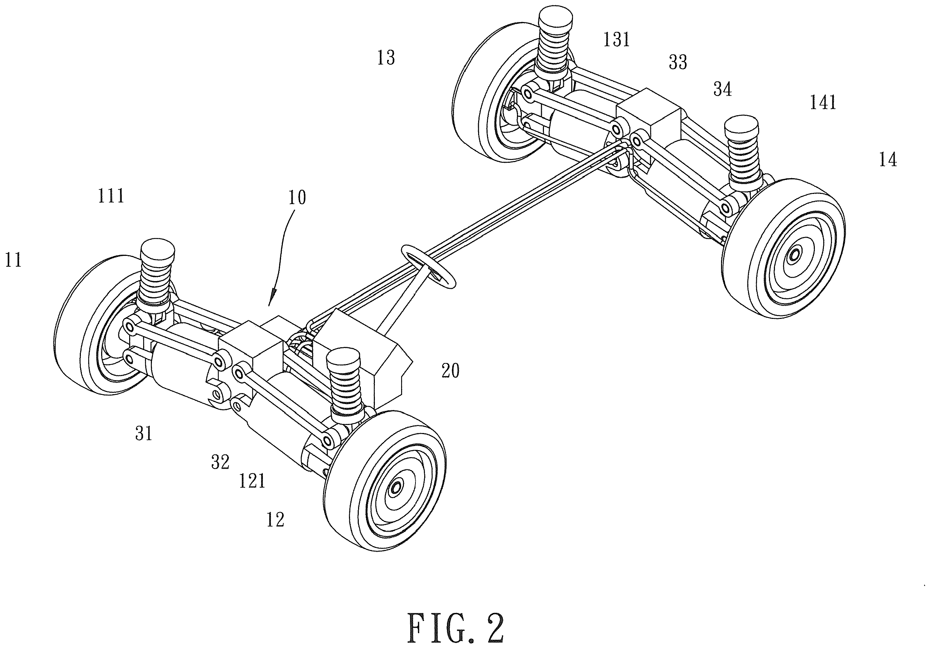

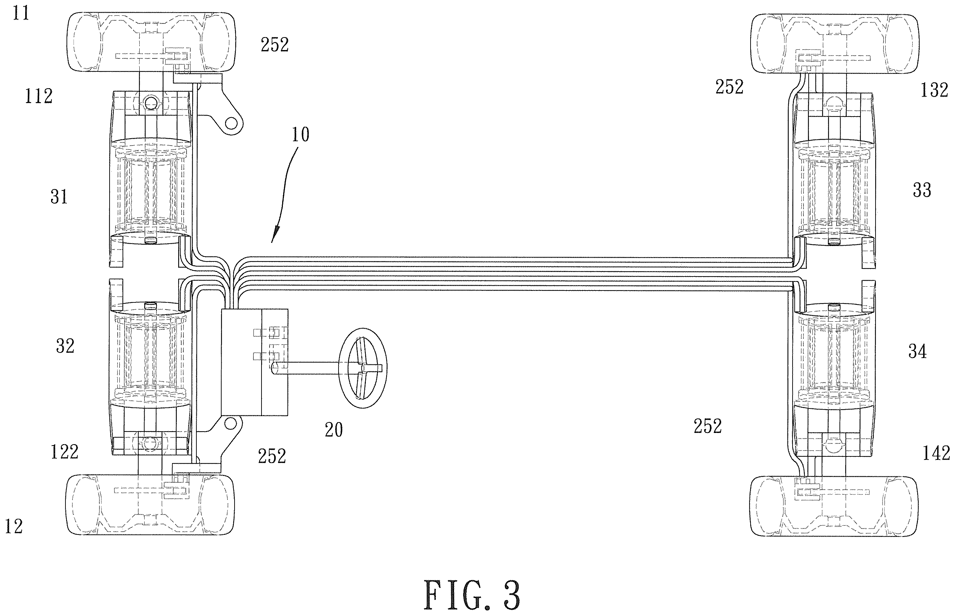

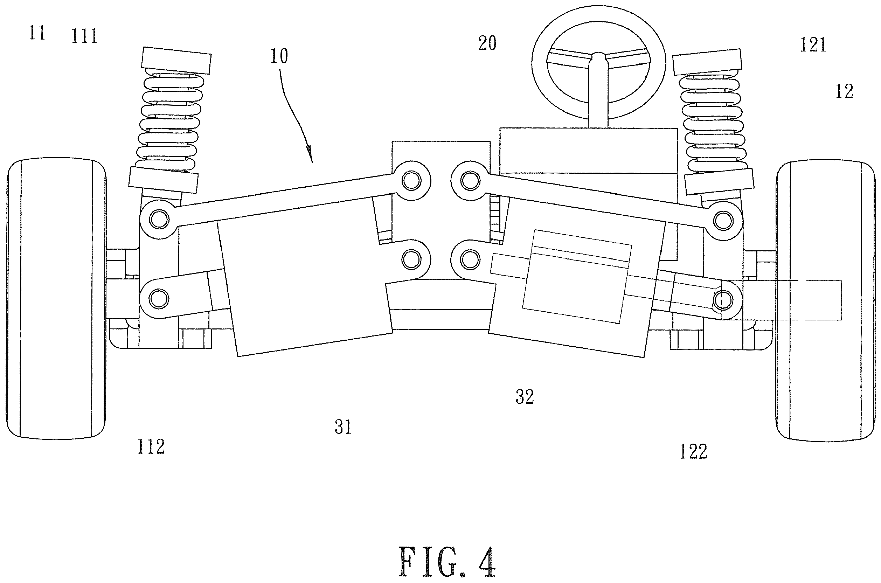

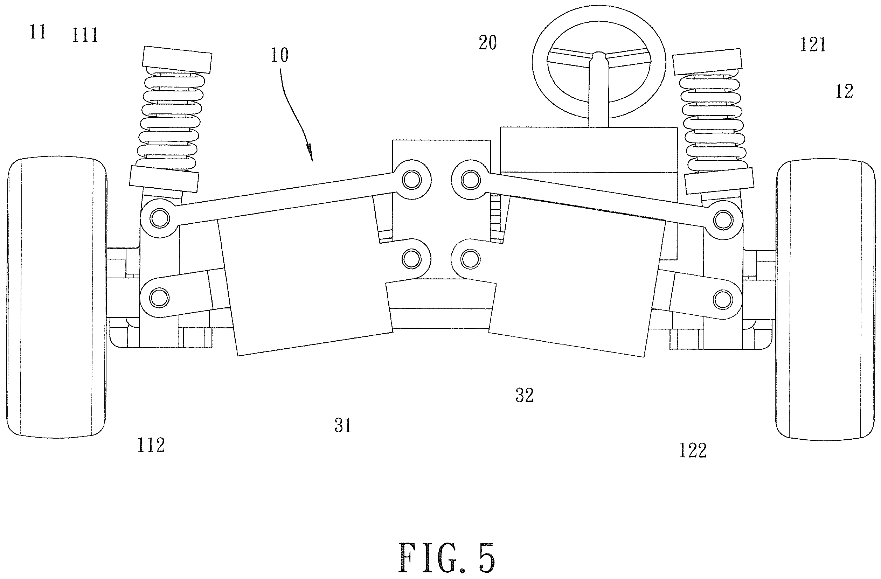

With reference to FIGS. 1 to 5, a direct drive system for an electric car according to a preferred embodiment of the present invention, wherein the electric car comprises: a body 10 and four wheels 11 to 14; each of the four wheels 11 to 14 includes a suspension system 111, 121, 131 or 141, a wheel shaft 112, 122, 132 or 142, and a driving motor 31, 32, 33 or 34 being a lower arm of the suspension system 111, 121, 131 or 141, wherein an output shaft 311, 321, 331 or 341 of the driving motor 31, 32, 33, 34 is rotatably connected with the wheel shaft 112, 122, 132 or 142 of each of the four wheels 11 to 14 (as shown in FIG.4), such that the driving motor 31, 32, 33 or 34 independently drives each of the four wheels 11 to 14 to rotate, thus balancing a height difference during driving.

The body 10 includes a control system 20, and the control system 20 has at least one rotation module 21, an acceleration module 22, and a brake module 23, wherein between the control system 20 and each of the four wheels 11 to 14 are defined at least one speed sensor 251 for sensing wheel speed and a braking sensor 252 for sensing wheel braking, and the control system 20 is coupled with each of four driving motors 31 to 34 to transmit control signals and output signals among the four driving motors 31 to 34 and the control system 20.

Thereby, the direct drive system of the present invention decreases power consumption of the electric car and drives the electric car to run durably.

In operation, as illustrated in FIGS. 1 to 3, the control system 20 starts the electric car, stops the electric car, and controls turning direction, acceleration, deceleration, and braking of the electric car, wherein control codes of starting, stopping, turning, accelerating, decelerating, and braking the electric car are encode to the control signals which are transmitted to drive each of the four driving motors 31 to 34 and are sent back to the control system 20 after the at least one speed sensor 251 senses the wheel speed and the braking sensor 252 senses the wheel braking.

Thereby, the control system 20 controls each of the four wheels 11 to 14 by using each of the four driving motors 31 to 34 to reduce power loss and consumption and to enhance driving durability of the electric car. Preferably, each of the four wheels 11 to 14 is driven independently to increase control flexibility, and when one of the four driving motors 31 to 34 is broken, the electric car still can be driven to run by others of the four driving motors 31 to 34, thus enhancing driving safety.

While the preferred embodiments of the invention have been set forth for the purpose of disclosure, modifications of the disclosed embodiments of the invention as well as other embodiments thereof may occur to those skilled in the art. The scope of the claims should not be limited by the preferred embodiments set forth in the examples, but should be given the broadest interpretation consistent with the description as a whole.

## Claims

1. A direct drive system for an electric car comprising: a body (10) and four wheels (11, 12, 13, 14), each of the four wheels (11, 12, 13, 14) including a suspension system (111, 121, 131, 141), a wheel shaft (112, 122, 132, 142), and a driving motor (31, 32, 33, 34), wherein:
an output shaft (311, 321, 331, 341) of the driving motor (31, 32, 33, 34) is rotatably connected with the wheel shaft (112, 122, 132, 142) of each of the four wheels (11, 12, 13, 14), such that the driving motor (31, 32, 33, 34) independently drives each of the four wheels (11, 12, 13, 14) to rotate;
the body (10) includes a control system (20), and the control system (20) has at least one rotation module (21), an acceleration module (22), and a brake module (23); and
the control system (20) is coupled with each of four driving motors (31, 32, 33, 34) to transmit control signals and output signals among the four driving motors (31, 32, 33, 34) and the control system (20)
the direct drive system being **characterized in that** each driving motor (31, 32, 33, 34) is a lower arm of the respective suspension system (111, 121, 131, 141).

2. The direct drive system for the electric car as claimed in claim 1, **characterized in that** between the control system (20) and each of the four wheels (11, 12, 13, 14) is defined at least one speed sensor (251) for sensing wheel speed.

3. The direct drive system for the electric car as claimed in claim 1 or 2, **characterized in that** between the control system (20) and each of the four wheels (11, 12, 13, 14) is defined a braking sensor (252) for sensing wheel braking.

## Patentansprüche

1. Direktes Antriebssystem für Elektrofahrzeug, umfassend: einen Körper (10) und vier Räder (11, 12, 13, 14), wobei jedes der vier Räder (11, 12, 13, 14) ein Aufhängungssystem (111, 121, 131, 141), eine Radwelle (112, 122, 132, 142) und einen Antriebsmotor (31, 32, 33, 34) umfasst, wobei:
eine Ausgangwelle (311, 321, 331, 341) des Antriebsmotors (31, 32, 33, 34) drehbar mit der Radwelle (112, 122, 132, 142) jedes der vier Räder (11, 12, 13, 14) verbunden ist, so dass der Antriebsmotor (31, 32, 33, 34) unabhängig jedes der vier Räder (11, 12, 13, 14) in Drehung versetzt;
der Körper (10) ein Steuerungssystem (20) umfasst und das Steuerungssystem (20) mindestens ein Rotationsmodul (21), ein Beschleunigungsmodul (22) und ein Bremsmodul (23) aufweist; und
das Steuerungssystem (20) mit jedem der vier Antriebsmotoren (31, 32, 33, 34) gekoppelt ist, um Steuerungssignale zu übertragen und Signale unter den vier Antriebsmotoren (31, 32, 33, 34) und dem Steuerungssystem (20) auszugeben, wobei das direkte Antriebssystem **dadurch gekennzeichnet ist, dass** jeder Antriebsmotor (31, 32, 33, 34) ein unterer Arm des jeweiligen Aufhängungssystems (111, 121, 131, 141) ist.

2. Direktes Antriebssystem für Elektrofahrzeug nach Anspruch 1, **dadurch gekennzeichnet, dass** zwischen dem Steuerungssystem (20) und jedem der vier Räder (11, 12, 13, 14) mindestens ein Geschwindigkeitssensor (251) zum Messen der Radgeschwindigkeit definiert ist.

3. Direktes Antriebssystem für Elektrofahrzeug nach Anspruch 1 oder 2, **dadurch gekennzeichnet, dass** zwischen dem Steuerungssystem (20) und jedem der vier Räder (11, 12, 13, 14) ein Bremssensor (252) zum Messen der Radbremsung definiert ist.

## Revendications

1. Système d'entraînement direct pour une voiture électrique comprenant : une carrosserie (10) et quatre roues (11, 12, 13, 14), chacune des quatre roues (11, 12, 13, 14) comprenant un système de suspension (111, 121, 131, 141), un arbre de roue (112, 122, 132, 142) et un moteur d'entraînement (31, 32, 33, 34), dans lequel :
un arbre de sortie (311, 321, 331, 341) du moteur d'entraînement (31, 32, 33, 34) est relié de manière rotative à l'arbre de roue (112, 122, 132, 142) de chacune des quatre roues (11, 12, 13, 14), de telle sorte que le moteur d'entraînement (31, 32, 33, 34) entraîne en rotation indépendamment chacune des quatre roues (11, 12, 13, 14) ;
la carrosserie (10) comprend un système de commande (20), et le système de commande (20) a au moins un module de rotation (21), un module d'accélération (22) et un module de frein (23) ; et
le système de commande (20) est couplé à chacun des quatre moteurs d'entraînement (31, 32, 33, 34) pour émettre des signaux de commande et des signaux de sortie parmi les quatre moteurs d'entraînement (31, 32, 33, 34) et le système de commande (20),
le système d'entraînement direct étant **caractérisé par le fait que** chaque moteur d'entraînement (31, 32, 33, 34) est un bras inférieur du système de suspension respectif (111, 121, 131, 141).

2. Système d'entraînement direct pour voiture électrique selon la revendication 1, **caractérisé par le fait que**, entre le système de commande (20) et chacune des quatre roues (11, 12, 13, 14), est défini au moins un capteur de vitesse (251) pour détecter une vitesse de roue.

3. Système d'entraînement direct pour voiture électrique selon la revendication 1 ou 2, **caractérisé par le fait que**, entre le système de commande (20) et chacune des quatre roues (11, 12, 13, 14), est défini un capteur de freinage (252) pour détecter un freinage de roue.
